# EUROPEAN PATENT APPLICATION

(11) **EP 4 332 043 A1**
(43) Date of publication of application: **06.03.2024**
(21) Application number: 22207903.0
(22) Date of filing: 16.11.2022
(51) Int. Cl.: B66B 5/02

(54) **ELEVATOR BRAKING DEVICE AND ELEVATOR SYSTEM**

(30) Priority: 29.08.2022 CN 202211039431
(71) Applicant: Otis Elevator Company, Farmington, Connecticut 06032 (US)
(72) Inventor: TANG, Zhengzong, Tianjin 300457 (CN); NIU, Yanchao, Tianjin 300457 (CN); LIU, Ruguang, Tianjin 300457 (CN); GAO, Guochen, Tianjin 300457 (CN)
(74) Representative: Dehns

(57) **Abstract**

The disclosure relates to an elevator braking device and an elevator system. The elevator braking device is used for performing braking operations on an elevator driving device comprising a brake disc (20) and it has a first state and a second state, and comprises: a body (10), with its interior accommodating at least a part of the brake disc (20), and a support member (30) axially fixed relative to the brake disc (20); a guide member (15) connected to the support member (30), wherein the body (10) is movable relative to the brake disc (20) along the guide member (15); a first friction member (11) and a control portion which are arranged inside the body (10) and adjacent to a first side (21) of the brake disc, wherein a part of the control portion is connected to the body (10), and the first friction member (11) moves along the guide member (15) under control of the control portion to be in contact with the first side (21) to perform a braking operation in a first state, and to be out of contact with the first side (21) in a second state, respectively; and a second friction member (12) arranged inside the body (10) and adjacent to a second side (22) of the brake disc (20), wherein the second friction member (12) is connected to the body (10) and is in contact with the second side (22) to perform a braking operation in the first state, and is out of contact with the second side (22) when the body (10) is moved along the guide member (15) as the first friction member (11) is out of contact with the first side (21) in the second state.

## Description

### TECHNICAL FIELD

The present disclosure relates to the technical field of elevators, and in particular to an elevator braking device and an elevator system.

### BACKGROUND

As the safety equipment in an elevator system, the elevator braking device can play a key role in ensuring the reliable operation of the equipment, the personal safety of passengers, and the like. For example, when abnormal conditions such as equipment failures and emergencies occur in elevator driving devices such as traction machines and hoisting machines during use, they can be braked by the elevator braking device, thereby timely preventing the elevator driving device from continuing to supply power to the elevator equipment to cause the elevator equipment to stop running.

Although various elevator braking device products have been provided in the prior art, it seems to the present application that they still have deficiencies and limitations in aspects such as the overall construction, manufacturing and operating costs, installation layout, work performance, etc., and thus cannot meet the application needs very well. For example, based on cost, installation space and other considerations, currently, relatively cheap block brakes are often used in some applications. Since it only provides one-way braking pressure, this pressure and its reaction force will exert a large load on the motor rotor and bracket, so the motor rotor and bracket should have sufficient strength. In contrast, the disc brake provides a pair of braking pressures in opposite directions to the brake disc, so the load on the machinery equipment is much smaller as the two forces cancel each other. However, due to complex structure and high price of the disc brake, it will not be considered for use in, for example, cost-sensitive operating environments.

### SUMMARY

In view of the foregoing, the present disclosure provides an elevator braking device and an elevator system, so as to solve or at least alleviate one or more of the aforementioned problems and other problems in the prior art, or to provide alternative technical solutions to the prior art.

First, according to one aspect of the present disclosure, an elevator braking device for performing braking operations to an elevator driving device is provided, wherein the elevator driving device is provided with a brake disc having opposite first and second sides, and the elevator braking device has a first state and a second state, and comprises:
a body, with its interior accommodating at least a part of the brake disc, and a support member axially fixed relative to the brake disc;
a guide member connected to the support member, wherein the body is movable relative to the brake disc along the guide member;
a first friction member and a control portion which are arranged inside the body and adjacent to the first side, wherein a part of the control portion is connected to the body, and the first friction member moves along the guide member under control of the control portion to be in contact with the first side to perform a braking operation in the first state, and to be out of contact with the first side in the second state; and
a second friction member arranged inside the body and adjacent to the second side, wherein the second friction member is connected to the body and is in contact with the second side to perform a braking operation in the first state, and is out of contact with the second side when the body is moved along the guide member as the first friction member is out of contact with the first side in the second state.

In the elevator braking device according to the disclosure, optionally, the control portion comprises a first force supply member, an electromagnetic member, a fixed member and a moving member, the first force supply member and the electromagnetic member are installed on the fixed member, the fixed member is connected with the body and fixed relative thereto, the moving member is connected with the first friction member and is movably arranged between the fixed member and the brake disc along the guide member, and the guide member is provided with a limiting portion for restricting a moving distance of the moving member, and wherein in the first state, the first force supply member provides an acting force to the moving member to move it towards the first side, so that the first friction member is in contact with the first side and provides a reaction force to move the body towards the second side, and then the second friction member is brought to be in contact with the second side, and in the second state, the electromagnetic member provides an electromagnetic force to overcome the acting force and move the moving member towards the fixed member, so that the first friction member is out of contact with the first side, and then when the moving member moves and is restricted from moving by the limiting portion, the body is pushed in an opposite direction by the first force supply member and then the second friction member is brought out of contact with the second side.

In the elevator braking device according to the disclosure, optionally, the fixed member is detachably connected to an inner wall of the body, the electromagnetic member comprises one or more electromagnetic coils, and the first force supply member comprises one or more elastic members, the elastic member including a spring.

In the elevator braking device according to the disclosure, optionally, the fixed member is connected to the inner wall of the body through a threaded connection, and/or the electromagnetic coil is wound on an outer wall of the fixed member.

In the elevator braking device according to the disclosure, optionally, the guide member is provided with a connecting portion located at one end of the guide member for correspondingly matching and connecting with a matching portion on the support member, the limiting portion is located between two ends of the guide member, and the moving member is restricted to move between the limiting portion and the connecting portion.

In the elevator braking device according to the disclosure, optionally, the connecting portion and the matching portion adopt a threaded connection, and the limiting portion comprises a step provided on the guide member.

In the elevator braking device according to the disclosure, optionally, the guide member is detachably connected to the support member, and/or a bushing is provided between the guide member and the body, and/or a bushing is provided between the guide member and the moving member.

In the elevator braking device according to the disclosure, optionally, the elevator braking device further comprises a second force supply member arranged between the guide member and the body, for providing an acting force such that the body is capable of moving relative to the brake disc along the guide member.

In the elevator braking device according to the disclosure, optionally, the second force supply member comprises one or more elastic members that abut against the guide member and the body respectively, the elastic member including a spring.

In the elevator braking device according to the disclosure, optionally, the body is provided with a through hole, the guide member is arranged inside the body by passing through the through hole, and a part of the guide member and the elastic member are arranged in the through hole, and wherein an outer side of the body is provided with a closure member for closing the through hole and detachably connected with the body, and the elastic member abuts against the guide member, and abuts against the body via the closure member.

In the elevator braking device according to the disclosure, optionally, at least two guide members are provided, which are evenly arranged along the circumferential direction of the first friction member.

In the elevator braking device according to the disclosure, optionally, a friction portion of the first friction member in contact with the first side, and a friction portion of the second friction member in contact with the second side are symmetrically arranged with respect to the brake disc.

In the elevator braking device according to the disclosure, optionally, the second friction member is detachably connected to an inner wall of the body.

In the elevator braking device according to the disclosure, optionally, the second friction member is connected to the inner wall of the body through a threaded connection.

In the elevator braking device according to the disclosure, optionally, the body is integrally formed, and/or the support member is a support portion on the elevator driving device.

Secondly, according to another aspect of the present disclosure, an elevator system is further provided, comprising:
an elevator driving device for supplying power to drive the elevator system to operate, the elevator driving device comprising a brake disc; and
an elevator braking device according to any of the above, provided to operate by being in contact or out of contact with the brake disc, so that the elevator driving device is prevented from supplying power to the elevator system in the first state, and is allowed to supply power to the elevator system in the second state.

In the elevator system according to the disclosure, optionally, the elevator system includes an elevator, an escalator, and a moving walkway, and the elevator driving device includes a traction machine and a hoisting machine.

Using the elevator braking device provided by the present disclosure in an elevator system can effectively reduce the number and complexity of components, save space, reduce cost and guarantee work performance. Therefore, the elevator braking device according to the disclosure has obvious advantages over the existing elevator braking devices. According to the solutions of the disclosure, modularized, serialized and integrated design of the members such as the control portion, friction member and guide member can be realized, so that the elevator braking device can be widely used in different occasions and fully adapt to various elevator operating environments.

### BRIEF DESCRIPTION OF THE DRAWINGS

The technical solutions of the present disclosure will be described in further detail below with reference to the accompanying drawings and embodiments. However, it should be understood that these drawings are designed merely for the purpose of explanation and only intended to conceptually illustrate the structural configurations described herein, and are not required to be drawn to scale.
FIG 1 is a side cross-sectional structural schematic diagram of an embodiment of elevator braking device according to the disclosure when it is assembled and is in use.
FIG 2 is a side cross-sectional structural schematic diagram of the embodiment of FIG. 1 when being assembled, where a part of the body, the second friction member and the control portion is shown.
FIG. 3 is another side cross-sectional structural schematic diagram of the embodiment of FIG. 1 when being assembled, where the first friction member, the second friction member, the body and the control portion are shown at the same time.
FIG. 4 is another side cross-sectional structural schematic diagram of the embodiment of FIG. 1 when being assembled, where the guide member, the second force supply member and the closure member are exploded and shown schematically.
FIG. 5 is a side cross-sectional structural schematic diagram of the embodiment of FIG. 1 when it is in a first state.
FIG. 6 is a side cross-sectional structural schematic diagram of the embodiment of FIG. 1 during the process of entering a second state from a first state.
FIG. 7 is a side cross-sectional structural schematic diagram of the embodiment of FIG. 1 when it is in a second state.

### DETAILED DESCRIPTION

Firstly, it should be noted that the structure, composition, characteristics, advantages and the like of the elevator braking device and elevator system according to the disclosure will be described below by way of examples. However, none of the descriptions should be understood as limiting the present disclosure in any way. In the text, the technical terms "first" and "second" are only used for the purpose of distinguishing and are not intended to indicate the order and relative importance thereof. The technical term "connected" means that a specific member is directly and/or indirectly connected to another member. The technical term "member" is intended to encompass any possible form in terms of structural configuration, composition, etc., for example, it may be composed of single or multiple parts.

In addition, for any single technical feature described or implied in the embodiments mentioned herein, or any single technical feature shown or implied in individual drawings, the present disclosure still allows for any combination or deletion of these technical features (or equivalents thereof) without any technical obstacle. Therefore, it should be considered that these more embodiments according to the disclosure are also within the scope recorded in this document. Furthermore, for the sake of brevity, general matters known to those skilled in the art, such as the basic working principles of elevator driving device, electromagnetic coil, armature, electromagnetic force, etc., will not be repeated here.

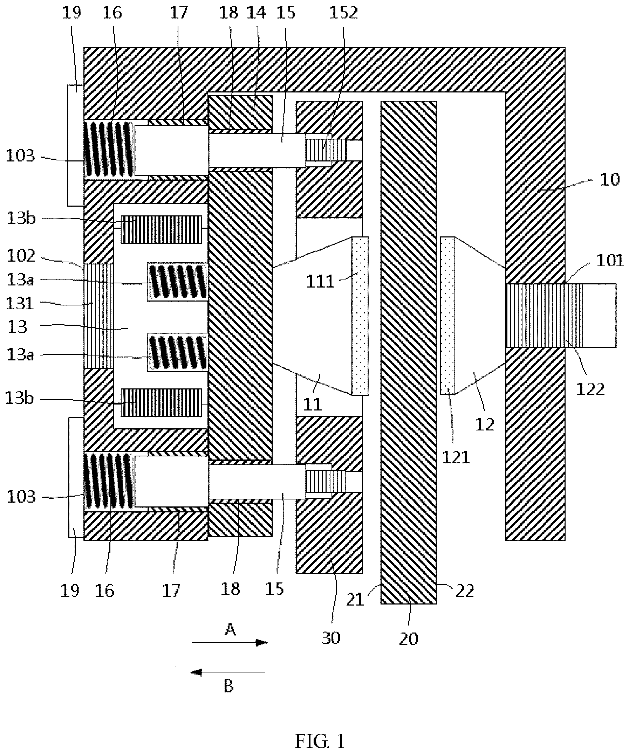

In FIGS. 1 to 7, the basic structure, installation arrangement, use, operation, etc. of an embodiment of an elevator braking device according to the disclosure are roughly described. The design ideas and technical advantages of the solutions of the disclosure can be understood from the following introduction to this embodiment.

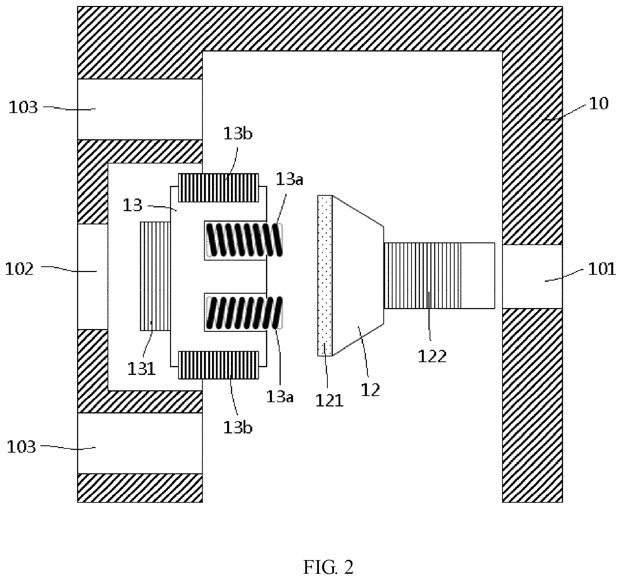

Referring first to FIG. 1, the figure schematically shows the scenario when this embodiment of elevator braking device after the assembly has been completed is in use. FIGS. 2, 3 and 4 further show several scenarios during assembly. In this embodiment of elevator braking device, a body 10, a first friction member 11, a second friction member 12, a fixed member 13, a moving member 14, a guide member 15 and other components are provided, which can be used for performing braking operations on the elevator driving device as required by an application. More specifically, the first friction member 11 and the second friction member 12 are brought into contact with the opposite two sides (i.e., a first side 21 and a second side 22) of a brake disc 20 in the elevator driving device respectively to achieve the braking effect, thereby achieving the effects such as safety protection, avoidance of equipment damage or personal injury. For the elevator driving device, it is usually configured in an elevator system to provide driving force for operation of the system. For example, a device such as a traction machine or a hoisting machine is installed at a suitable location in the system to drive the elevator car, counterweight, escalator or moving walkway to run. No restrictions are made with respect to the realization form, power, installation arrangement, etc. of such elevator driving devices herein.

In this embodiment of elevator braking device, body 10 can be configured to have an interior space for accommodating the components of the device such as the fixed member 13, the moving member 14 and the guide member 15, and at the same time accommodating other components, such as a support member 30, a part or the whole of a brake disc 20. The installation position of the support member 30 is fixed relative to the brake disc 20. That is, the installation position of the support member 30 is fixed relative to the axial direction of the brake disc 20, so that the entire elevator braking device can be supported by the support member 30. For example, in the example of FIG. 1, the entire elevator braking device can be carried by the connection between the guide member 15 and the support member 30. Optionally, the support part on the elevator driving device (e.g., the casing or a structure fixed on the casing that can be used for support) can be directly used as the support member 30. Of course, those skilled in the art can appreciate that a suitable position or structure can also be selected according to site conditions to separately arrange the support member 30, and the whole or a part of the support member 30 can be considered to be accommodated in the interior space of the body 10 as required.

The body 10 can be made of any one or more suitable materials such as cast iron, steel, and the like. For example, the body 10 can be integrally formed by means of metal casting, machining, etc. to facilitate the formation of a relatively more compact structure, or it can also be constructed by any feasible connection methods such as welding, riveting, and the like. The outline of the body 10 and the specific shape of its interior space can be configured according to actual needs. For example, it can be configured as a rectangle, a square, a hemisphere or a combined shape, etc., so as to flexibly arrange the required components or structures.

In order to facilitate understanding, FIGS. 2, 3 and 4 respectively show the general situations of the fixed member 13, the second friction member 12, the moving member 14, the first friction member 11, the guide member 15, etc. being installed in place or being about to be installed in place in the body 10.

For example, as shown in FIG. 2, the second friction member 12 can be arranged in the interior space of the body 10, so as to be in contact with a second side 22 of the adjacent brake disc 20 to perform a corresponding braking operation as required by an application, and then to release the above braking operation by bringing the two out of contact when necessary. In FIG. 2, the reference numeral 121 is used to schematically denote a friction portion 121, which can be made of suitable friction material as required, on the second friction member 12 for performing the aforementioned braking operation. Optionally, the second friction member 12 can be detachably connected to an inner wall of the body 10, for example, by matching a connecting portion 122 on the second friction member 12 and a matching portion 101 (e.g., a mounting hole, etc.) on the body 10. As an example, a threaded connection can be adopted between them, so that operations such as installation, disassembly, relative position adjustment, etc. can be carried out in a very convenient manner. For example, the depth of thread penetration can be controlled to allow fine-tuning or rapid adjustment of the clearance between the second friction member 12 and the brake disc 20.

Continuing to refer to FIG. 2, the fixed member 13 together with the force supply members 13a and the electromagnetic members 13b arranged thereon can be installed in the interior space of the body 10 as a separate integral module. For example, it can be mounted on the inner wall of the body 10 in a detachable manner. As an example, a threaded connection can be adopted between the connecting portion 131 on the fixed member 13 and the matching portion 102 (e.g., a mounting hole, etc.) on the body 10, which makes it easy for manufacturing, processing and installation operations. It should be appreciated that "fixed member" herein is named relative to the body, because it is fixedly connected with the body so as to maintain a relatively fixed position with the body. When the elevator braking device works, the fixed member can move along with the body.

The fixed member 13 can be constructed into any suitable shape as required. By providing one or more holes on the fixed member 13, the force supply members 13a as required by an application can be arranged in the holes, so that an acting force is applied to the moving member 14 through this or these force supply members 13a to drive the moving member 14 to be separated from the body 10. In one or some applications, the force supply member 13a may be optionally implemented by an elastic member such as a spring, for example, a coil spring, a hourglass shaped spring, a rectangular spring, and the like. In this document, the specific configuration (e.g., spring stiffness, length, thread pitch, material, etc.) of such elastic members can be configured as required.

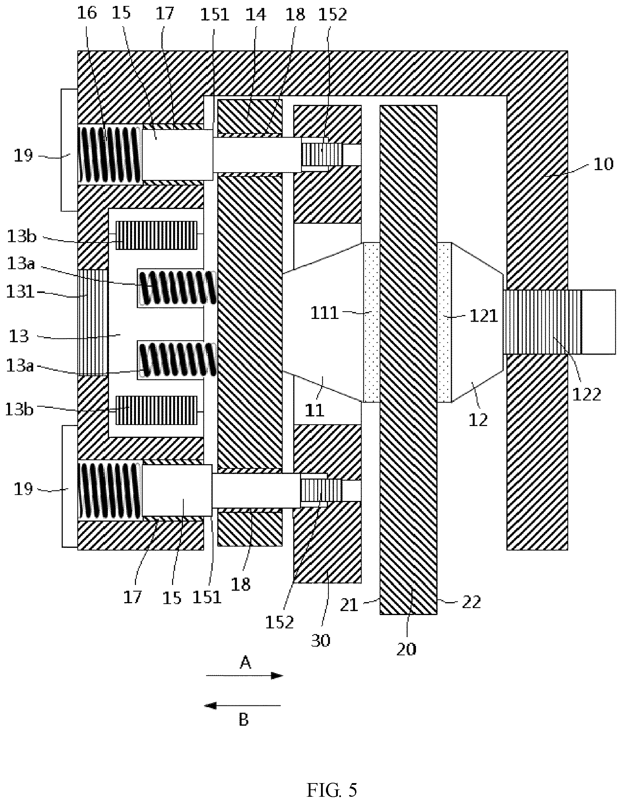

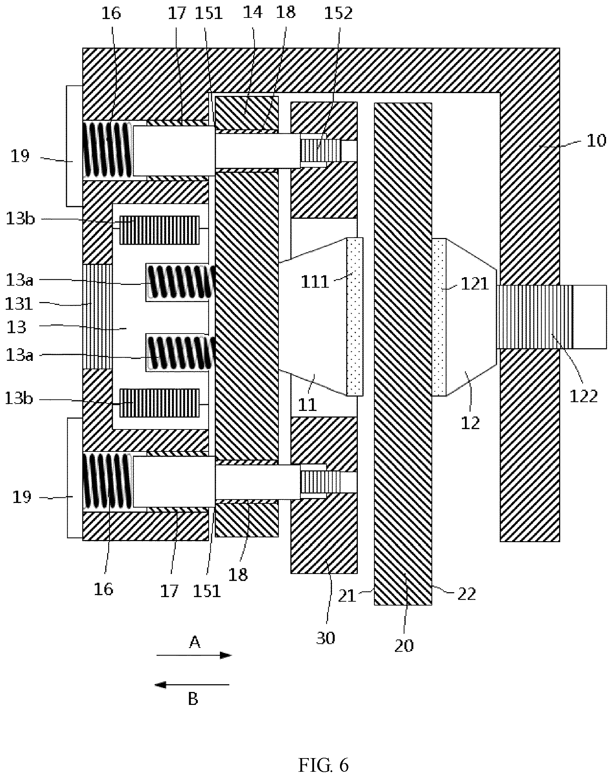

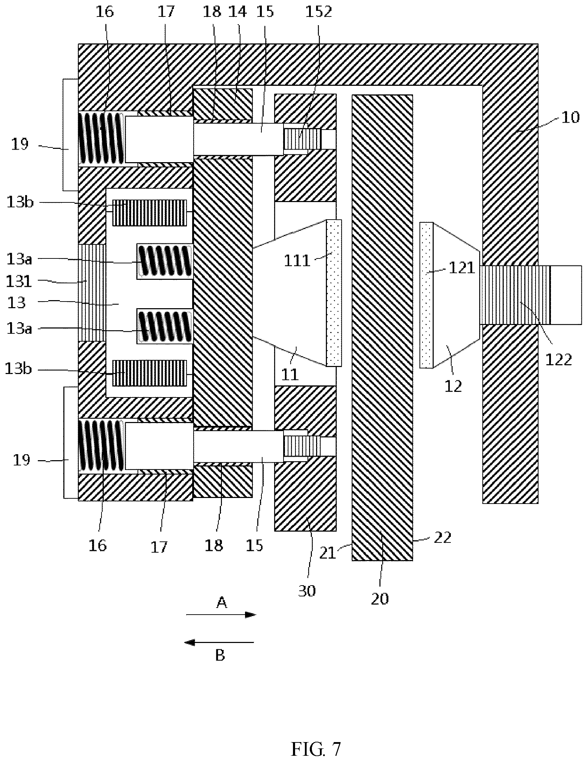

Referring to, for example, the working state shown in FIG. 5, the moving member 14 can be pushed away from the body 10 by the acting force provided by the force supply members 13a (an arrow A has been used in the drawing to indicate the movement direction at this time), and then the first friction member 11 connected with the moving member 14 can be brought into contact with the first side 21 of the brake disc 20 to perform the corresponding braking operation on the elevator driving device. As the first friction member 11 is in contact with the first side 21, a reaction force will at the same time also be provided to drive the body 10 to move towards the second side 22 in the direction indicated by the arrow A, so that the second friction member 12 will be in contact with the second side 22 to perform a corresponding braking operation. On the contrary, if the acting force from the force supply members 13a is insufficient to resist the electromagnetic force from electromagnetic members 13b (which will be described later), in the working state shown in FIGS. 6 and 7 for example, the moving member 14 will move towards the fixed member 13 until it is blocked by the limiting portions 151 of the guide members 15 (arrow B has been used in the drawing to indicate the movement direction at this time), so that the first friction member 11 can be brought out of contact with the first side 21, whereby the corresponding braking operation previously applied by the first friction element 11 to the brake disc 20 can be released. At this time, the electromagnetic force will pull the body 10 in the opposite direction, and the fixed member 13 will move towards the moving member 14 until the fixed member 13 and the moving member 14 are completely fitted (arrow A has been used in the drawing to indicate the movement direction at this time), so that the second friction member 12 can be brought out of contact with the second side 22, whereby the corresponding braking operation previously applied by the second friction member 12 to the brake disc 20 can be released. For the first friction member 11, it can be provided with a friction portion 111 made of a suitable friction material to perform the above braking operation. Optionally, it can be considered that the friction portion 111 and the friction portion 121 on the second friction member 12 form a symmetrical arrangement with respect to the brake disc 20, so as to achieve a substantially uniform braking operation effect on both sides of the brake disc 20.

In addition, electromagnetic members 13b can be arranged on the fixed member 13 to provide electromagnetic force when needed, and the direction of the electromagnetic force is opposite to that of the acting force from the aforementioned force supply members 13a. By providing the electromagnetic force when needed, the acting force from the force supply members 13a can be overcome, so that the moving member 14 can be driven to move towards the body 10. For example, as shown in FIGS. 6 and 7, the moving member 14 is pressed against the inner wall of the body 10, and the first friction member 11 is brought out of contact with the first side 21 of the brake disc 20. The moving member 14, which is used in cooperation with the electromagnetic members 13b, is also often referred to as an armature or a gag bit in some applications.

An appropriate number of electromagnetic members 13b can be arranged on the fixed member 13 as required, for example, it can be realized by arranging one or several electromagnetic coils at any suitable positions on the fixed member 13. When this or these electromagnetic coils are energized, there will be electromagnetic forces available for use. Optionally, the electromagnetic coils can be wound directly on the outer wall of the fixed member 13 or other suitable positions. Regarding the configuration of the above electromagnetic coils, the present disclosure allows selection of configurations according to application needs without making specific limitations. It should be noted that out of cost control and other considerations, according to the solution of the present disclosure, the electromagnetic members 13b (e.g., electromagnetic coils) can only be selected to be made of materials with good electromagnetic properties, while it is not necessary to set certain requirements for one or some of the components as some existing braking devices, for example, the motor rotor and bracket in the existing block brakes need to meet specific strength requirements. Therefore, the present disclosure greatly facilitates the device to be lower in cost on the premise of meeting the work performance requirements, which therefore will promote the product competitiveness of the elevator braking device and effectively expand its application scope. For example, it can be applied to original relatively low-end elevator application environments.

As mentioned above, the modular, integrated and serialized design and manufacture of the fixed member 13 can be advantageously achieved by means of the above various configurations, thereby facilitating the reduction of the number and complexity of components. For example, only by replacing or adjusting the corresponding configuration (such as size, quantity, shape, physical characteristics, etc.) of the force supply members 13a and/or the electromagnetic members 13b, fixed members 13 of the same size can be made to possess different performance characteristics so as to achieve interchangeability. As a result, bodies 10 with the same shape can be completely suitable for use in different elevator environments, which will greatly expand the application scope of the elevator braking device, and help to reduce the cost of manufacture, installation, use and maintenance of the device of the present disclosure.

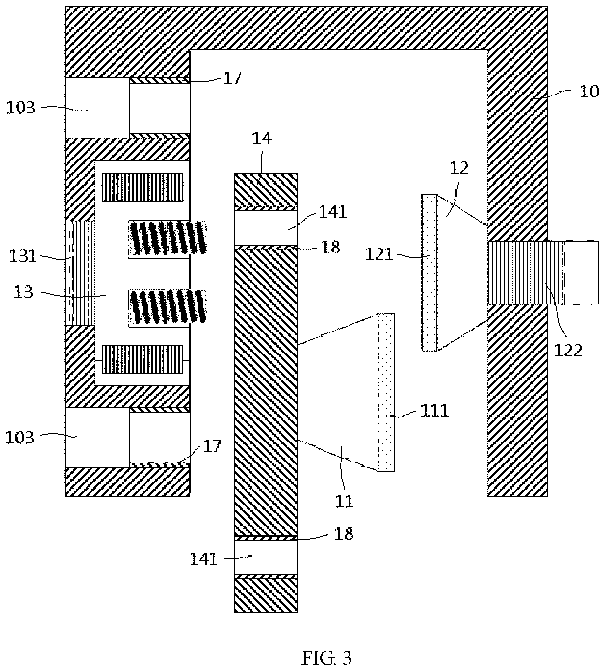

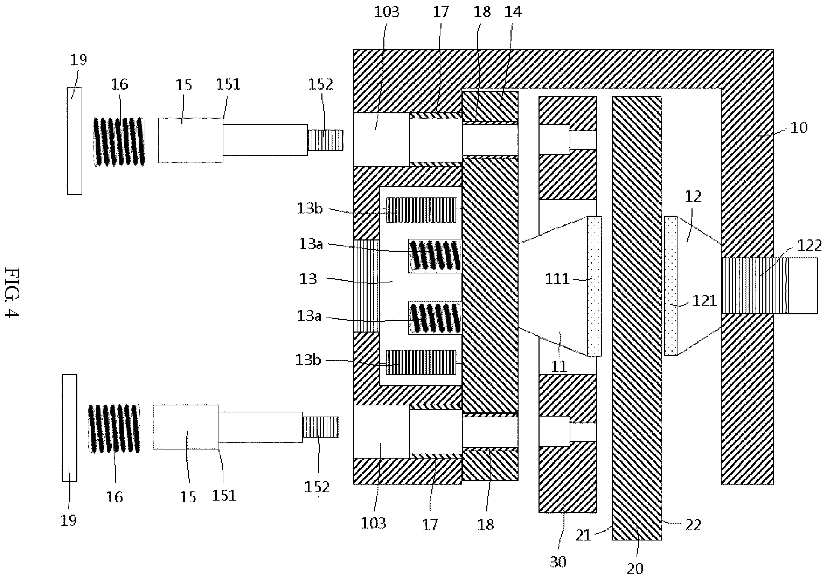

With reference to FIGS. 3 and 4 in conjunction, after the fixed member 13 and the like are installed in the body 10, the moving member 14, the first friction member 11, the guide member 15, etc. can then be installed in the body 10 as well. The moving member 14 and the first friction member 11 can be connected using any feasible means such as welding, threaded connection, bolting, etc., and they are arranged on the fixed member 13 and the brake disc 20, so that the first friction member 11 can move along with the moving member 14 under the action of the aforementioned acting force from the force supply members 13a and/or the electromagnetic force from the electromagnetic members 13b, which will be described in detail below.

The guide members 15 are installed in the body 10 and form a fixed connection with the support member 30, whereby the guide members 15 can be used to provide support for the body 10, the moving member 14 and the components mounted thereon. The body 10 and the moving member 14 are independently movable relative to the brake disc 20 along the guide member 15 due to, for example, the acting force from the aforementioned force supply members 13a and/or the electromagnetic force from the electromagnetic members 13b. The guide member 15 can be made of metal materials such as steel, iron, etc., or other suitable materials, and can be optionally configured into any suitable shape and structure such as a rod shape.

As an exemplary illustration, the guide members 15 can be installed and arranged in a detachable manner. For example, as shown in FIGS. 3 and 4, through holes 103 and 141 can be optionally opened on the body 10 and the moving member 14 respectively, so that the guide members 15 pass through the body 10 and the moving member 14 to be connected to the support member 30. In this way, the weight of the body 10 and the moving member 14, etc. can be carried by the support member 30 via the guide members 15. In addition, different from the existing elevator braking devices, most of which require two or more guide rods (or connecting rods) to be provided between different components (e.g., moving plate and static plate, moving plate/static plate and body, brake friction block support member and moving plate/static plate, brake friction block support member and moving plate and static plate, and different brake friction block support members), the device of the present disclosure, only by arranging separate guide members 15 between different components, can realize the function of the entirety of a plurality of existing guide rods. Since the guide members are highly integrated, it helps to reduce the number of components, lower the cost and failure rate of the device, and promote the formation of a more compact layout.

As another exemplary illustration, the guide member 15 may optionally be provided with a limiting portion 151 and a connecting portion 152. The connecting portion 152 can be provided at the end of the guide member 15, and is used to form a connection with the corresponding matching portion 31 on the support member 30, optionally through a threaded connection for example. When a threaded connection is adopted, the installation position of the guide member 15 can be easily and flexibly adjusted within the range of the thread stroke, which facilitates the realization of position adjustment and layout optimization. For example, the position of the limiting portion 151 can be adjusted to a desired position in a flexible and convenient manner by fine-tuning the depth of thread penetration of the connecting portion 152. Regarding the limiting portion 151, it can be arranged at any suitable position between the two ends of the guide member 15, so as to limit the movement range of the moving member 14 and the like according to application requirements when the device of the present disclosure is in use. For example, the first friction member 11 and the second friction member 12 can be optionally made to perform the corresponding operations on the brake disc 20 substantially centrally in the interior space of the body 10. In specific applications, the limiting portion 151 may adopt any feasible structural form such as steps, bumps, and the like.

According to the actual needs of an application, one or more guide members 15 can be configured in the elevator braking device. For example, two or more guide members 15 can be configured and uniformly arranged along the circumferential direction of the first friction member 11, so as to better balance and carry the overall weight, which is exemplarily shown in FIG. 4.

As an example, optional force supply members 16 and closure members 19 are also shown in FIG. 4, so as to achieve more possible cooperative use with the guide members 15. For example, in one or some embodiments, the force supply member 16 can be realized using elastic members such as one or more springs, which can be pressed against the guide member 15 and the body 10 (e.g., the inner wall of the body when no through holes are opened) to provide an acting force so that the body 10 can be moved relative to the brake disc 20 along the guide member 15 when necessary. For another example, optionally, when through holes 103 are provided on the body 10 to facilitate the installation of components into the body 10, additional closure members 19 may be provided to close the through holes 103 after the installation is completed. At this time, the force supply member 16 (e.g., a spring, etc.) can be pressed against the closure member 19 and the guide member 15 respectively to exert a force on them. Since the closure member 19 is connected to the body 10, the force applied to the closure member 19 from the force supply member 16 will be transmitted to the body 10, so that the force will also act on the body 10 to cause it to move relative to the brake disc 20 along the guide member 15.

With continued reference to FIGS. 5, 6 and 7, the specific use and operation scenarios of the foregoing embodiment of elevator braking device, as well as possible working state changes during this process, are exemplified by these accompanying drawings.

FIG. 5 firstly shows the general situation when this embodiment of elevator braking device is in a first state. That is, at this time, the first friction member 11 and the second friction member 12 can be operated so that they are brought into contact with the adjacent first side 21 and second side 22 respectively, so as to perform a braking operation on the brake disc 20, thereby preventing the elevator driving device from supplying power to the elevator system. As a result, in case of overspeed of elevator car, counterweight and escalator and other abnormal conditions, the safety of machinery equipment and people can be ensured, and unexpected accidents can be avoided.

As an example, when the device of the present disclosure is being installed, the moving member 14 and the fixed member 13 can be fitted by electromagnetic, mechanical or other suitable means, and the body 10 and the moving member 14 are relatively fixed at this time. In this state, the position of the limiting portion 151 of the guide member 15 is adjusted (for example, implemented via the through hole 103 from the outside of the body 10 and by means of the connecting portion 152 and/or the force supply member 16), such that a clearance of appropriate width is formed between the friction portion 111 of the first friction member 11 and the first side 21 of the brake disc 20 to meet a specific application need.

During the above adjustment operation, since the body 10 is allowed to move relative to the brake disc 20 along the guide member 15, the second friction member 12 connected to the body 10 will also change its position after the adjustment operation is completed. At this time, the current position of the second friction member 12 can be changed by adjusting the movement of the body 10, adjusting the engagement between the connecting portion 122 and the matching portion 101, and the like, either individually or in combination, such that a clearance of appropriate width can finally be formed between the friction portion 121 and the second side 22 to meet a specific application need.

Further, FIGS. 6 and 7 also exemplarily show the general working situation of this embodiment of elevator braking device when releasing the first state shown in FIG. 5 and returning to the second state. In the second state, neither the first friction member 11 nor the second friction member 12 in the elevator braking device performs any braking operation on the brake disc 20.

Referring to FIG. 6, when it is necessary to release the braking operation for the elevator driving device, the electromagnetic members 13b can be actuated to provide electromagnetic force at this time (e.g., by powering on the electromagnetic coils, etc.) to overcome the acting force applied from the power supply members 13a, so that the first friction member 11 is driven to move along with the moving member 14 along the guide members 15 in the direction indicated by arrow B towards the fixed member 13, thereby bringing the first friction member 11 to be first out of contact with the first side 21 of the brake disc 20. The above scenario has been exemplarily shown in FIG. 6. During the movement of the moving member 14 towards the fixed member 13, the moving member 14 will come into contact with, for example, the limiting portion 151 and the like on the guide member 15, so that its movement will be restricted. Since the installation position of the support member 30 is fixed relative to the brake disc 20, and the guide members 15 and the support member 30 are connected together, the resulting force applied to the moving member 14 after the combination of the electromagnetic force from the electromagnetic members 13b and the acting force from the force supply members 13a cannot drive the moving member 14 to continue to move towards the fixed member 13 in the direction indicated by the arrow B. Then, the aforementioned resulting force will be transmitted and acted on the body 10. Since the guide members 15 and the support member 30 are relatively fixed in position, and the movement of the moving member 14 has been restricted by the guide members 15 at this time, the body 10 whose displacement is not restricted will be made to move along the guide members 15 towards the direction indicated by the arrow A, which will then bring the second friction member 12 connected with the body 10 to be out of contact with the second side 22 until the moving member 14 and the fixed member 13 are fitted, thereby entering the second state shown in FIG. 7. At this time, since both the first friction member 11 and the second friction member 12 have released the previous corresponding braking operations on the brake disc 20, the power supply from the elevator driving device to the elevator system is therefore restored, so the elevator system is now allowed to operate normally.

By referring to the embodiment of elevator braking device shown in FIGS. 1 to 7, the basic structure, working principle and the like of the device of the present disclosure has been described in detail above. However, it should be noted that various possible designs, changes and adjustments are allowed to be made according to an actual application situation without departing from the design idea of the present disclosure.

For example, in the aforementioned embodiment, a specific implementation mode in which the control portion is formed by the force supply members 13a, the electromagnetic members 13b, the fixed member 13 and the moving member 14 is adopted, so that the working states of the first friction member and the second friction member can be controlled and operated accordingly. However, in one or some embodiments, the present disclosure also allows the formation of similar control portions using other feasible ways. For example, the electromagnetic force provided by the electromagnetic members can be replaced with the force provided by a motor, or the hydraulic force provided by a hydraulic mechanism, and the like.

For another example, it is shown in the illustrated embodiment that bushings 17 may be provided between the guide members 15 and the body 10, and/or bushings 18 may be provided between the guide members 15 and the moving member 14. By providing such bushing structures, the anti-wear properties at these locations will be enhanced. However, in one or some applications, it is allowed to consider not arranging one or more of the above bushings 17 and 18 in the present disclosure.

According to the technical solution of the present disclosure, an elevator system is further provided. Specifically, the elevator braking device designed according to the disclosure can be configured in the elevator system, and the elevator braking device can be used to perform braking operations on the elevator driving device in the elevator system (which has been discussed above herein), whereby power supply is prevented (or allowed) from the elevator driving device to the elevator system in the first state (or the second state) accordingly by means of the elevator braking device. Thus, while optimizing system structure, reducing costs, and ensuring operational performance, the application scope of the elevator system can be greatly expanded. It should be noted that the elevator system of the present disclosure may include, but is not limited to, elevator, escalator, moving walk, and the like, and the elevator driving device therein may include, but is not limited to, traction machine, hoisting machine, and the like.

The elevator braking device and elevator system according to the disclosure are described in detail above by way of examples only. These examples are merely used to illustrate the principles and embodiments of the present disclosure, rather than limiting the present disclosure. Various modifications and improvements can be made by those skilled in the art without departing from the spirit and scope of the present disclosure. Therefore, all equivalent technical solutions should fall within the scope of the present disclosure and be defined by the various claims of the present disclosure.

## Claims

1. An elevator braking device, for performing braking operations on an elevator driving device comprising a brake disc having opposite first and second sides, wherein the elevator braking device has a first state and a second state, and comprises:
a body, with its interior accommodating at least a part of the brake disc, and a support member axially fixed relative to the brake disc;
a guide member connected to the support member, wherein the body is movable relative to the brake disc along the guide member;
a first friction member and a control portion which are arranged inside the body and adjacent to the first side, wherein a part of the control portion is connected to the body, and the first friction member moves along the guide member under control of the control portion to be in contact with the first side to perform a braking operation in the first state, and to be out of contact with the first side in the second state; and
a second friction member arranged inside the body and adjacent to the second side, wherein the second friction member is connected to the body and is in contact with the second side to perform a braking operation in the first state, and is out of contact with the second side when the body is moved along the guide member as the first friction member is out of contact with the first side in the second state.

2. The elevator braking device according to claim 1, wherein the control portion comprises a first force supply member, an electromagnetic member, a fixed member and a moving member, the first force supply member and the electromagnetic member are installed on the fixed member, the fixed member is connected with the body and fixed relative thereto, the moving member is connected with the first friction member and is movably arranged between the fixed member and the brake disc along the guide member, and the guide member is provided with a limiting portion for restricting a moving distance of the moving member, and wherein in the first state, the first force supply member provides an acting force to the moving member to move it towards the first side, so that the first friction member is in contact with the first side and provides a reaction force to move the body towards the second side, and then the second friction member is brought to be in contact with the second side, and in the second state, the electromagnetic member provides an electromagnetic force to overcome the acting force and move the moving member towards the fixed member, so that the first friction member is out of contact with the first side, and then when the moving member moves and is restricted from moving by the limiting portion, the body is pushed in an opposite direction by the first force supply member and then the second friction member is brought out of contact with the second side.

3. The elevator braking device according to claim 2, wherein the fixed member is detachably connected to an inner wall of the body, the electromagnetic member comprises one or more electromagnetic coils, and the first force supply member comprises one or more elastic members, the elastic member including a spring

4. The elevator braking device according to claim 3, wherein the fixed member is connected to the inner wall of the body through a threaded connection, and/or the electromagnetic coil is wound on an outer wall of the fixed member.

5. The elevator braking device according to claim 2, 3 or 4, wherein the guide member is provided with a connecting portion located at one end of the guide member for correspondingly matching and connecting with a matching portion on the support member, the limiting portion is located between two ends of the guide member, and the moving member is restricted to move between the limiting portion and the connecting portion.

6. The elevator braking device according to claim 5, wherein the connecting portion and the matching portion adopt a threaded connection, and the limiting portion comprises a step provided on the guide member.

7. The elevator braking device according to any preceding claim, wherein the guide member is detachably connected to the support member, and/or a bushing is provided between the guide member and the body, and/or a bushing is provided between the guide member and the moving member.

8. The elevator braking device according to any preceding claim, wherein the elevator braking device further comprises a second force supply member arranged between the guide member and the body, for providing an acting force such that the body is capable of moving relative to the brake disc along the guide member, optionally wherein the second force supply member comprises one or more elastic members that abut against the guide member and the body respectively, the elastic member including a spring.

9. The elevator braking device according to claim 8, wherein the body is provided with a through hole, the guide member is arranged inside the body by passing through the through hole, and a part of the guide member and the elastic member are arranged in the through hole, and wherein an outer side of the body is provided with a closure member for closing the through hole and detachably connected with the body, and the elastic member abuts against the guide member, and abuts against the body via the closure member.

10. The elevator braking device according to any preceding claim, wherein at least two guide members are provided, which are evenly arranged along the circumferential direction of the first friction member.

11. The elevator braking device according to any preceding claim, wherein a friction portion of the first friction member in contact with the first side, and a friction portion of the second friction member in contact with the second side are symmetrically arranged with respect to the brake disc.

12. The elevator braking device according to any preceding claim, wherein the second friction member is detachably connected to an inner wall of the body; optionally wherein the second friction member is connected to the inner wall of the body through a threaded connection.

13. The elevator braking device according to any preceding claim, wherein the body is integrally formed, and/or the support member is a support portion on the elevator driving device.

14. An elevator system, comprising:
an elevator driving device for supplying power to drive the elevator system to operate, wherein the elevator driving device comprises a brake disc; and
an elevator braking device according to any of claims 1 to 13, provided to operate by being in contact or out of contact with the brake disc, so that the elevator driving device is prevented from supplying power to the elevator system in the first state, and is allowed to supply power to the elevator system in the second state.

15. The elevator system according to claim 14, wherein the elevator system includes an elevator, an escalator, and a moving walkway, and the elevator driving device includes a traction machine and a hoisting machine.
